(19) Europäisches Patentamt
European Patent Office
Office européen des brevets

(11) EP 2 784 501 A1

(12) # EUROPEAN PATENT APPLICATION

(43) Date of publication:
**01.10.2014 Bulletin 2014/40**

(51) Int Cl.:
***G01N 31/22*** *(2006.01)*

(21) Application number: **13161031.3**

(22) Date of filing: **26.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nanomedpharma Ltd**
**Liverpool Merseyside L16 9JD (GB)**

(72) Inventor: **Mirkhalaf, Fakhradin**
**Liverpool, Merseyside L16 9JD (GB)**

(54) **Rapid assay kit for direct photometric determination of copper and zinc levels in fluids**

(57) A rapid and simple assay kit for the sensitive and interference-free determination of copper and zinc in liquid samples with complex matrices has been invented. The kit comprises Zincon as the chelating agent stabilised in a polymer matrix. The proposed matrix allows long-term storage of the reagent at room temperature and enhanced photometric response. The kit also comprises metal releasing agents to release metal ions from the interfering binding molecules and the selectivity is controlled by the choice of the releasing agents, pH and the photometric wavelength. The reagents also contain water-soluble polymer and a surfactant for fast and efficient complexation and photometric detection. The water-soluble polymer is also used for the enhancement of the colour and stability of the complex.

EP 2 784 501 A1

## Description

### Field of the Invention

This invention relates to fields of analytical chemistry and medicine and discloses the formulation and design of a novel kit for the rapid, interference free and accurate photometric determination of copper and zinc ions in fluids containing high concentration of interfering molecules.

### Background of the Invetion

Metal ions are involved in almost all biological processes. Most popular techniques for the quantification of metal ions in metalloproteins are atomic absorption and emission spectroscopies. However, these techniques are costly, time consuming and labour intensive. An alternative procedure is the photometric techniques, which are based on the formation of a coloured complex between the desired metal ion and a chelating agent (sometimes called metal chelator, ligand or dye).

Copper is an essential trace element in biological systems and an adult body contains approximately 80 mg copper. It is mainly associated with enzymes and plays important roles in iron and catecholamine metabolism, free radical scavengaring and in the synthesis of haemoglobin, elastin and collagen. Copper is found predominantly bound to the copper transport protein caeruloplasmin, while a very small proportion is complexed with albumin and other metalloproteins. The most significant clinical application of copper determination is in the diagnosis of Wilson's disease. This is associated with a decrease in the synthesis of caeruloplasmin, which results in low serum copper levels. A second disorder of copper metabolism is Menkes' syndrome or kinky hair syndrome, an X-linked genetic defect in copper absorption. Low serum copper levels has also been observed in a number of hypoproteinemias, while increased levels are found in a number of acute and chronic diseases such as leukemia, hemochromatosis and biliary cirrhosis. The expected range of Cu in serum for healthy adults is 11-24 micro M and the normal daily urine excretion of copper is reported to be 2 to 37 μg and the upper normal limit is 0.47 μmoll/day (L. A. Kaplan, A. J. Pesce, Clinical Chemistry, 2nd Ed., 1989).

Zinc is also an important trace element and nutritional zinc deficiency in human is prevalent worldwide. Over 90 metalloenzymes require zinc for proper function. Deficiency is characterised by growth retardation in children and adolescents, hypogonamism in males, mild dermatitis, poor appetite, delayed wound healing, abnormal dark adaptation, and mental lethargy and impaired immune responses. The normal range of zinc in serum is 10-17.6 μM and in urine is 2.3-18.3 μmole/day (L. A. Kaplan, A. J. Pesce, Clinical Chemistry, 2nd Ed., 1989, p. 535).

Copper and zinc in foodstuffs have much in common and have relatively high levels in animal tissues, fruits and vegetables (T. P. Coultate, Food, The Chemistry of its Components, 2001, RSC).

Detecting of heavy metals including copper and zinc in biological fluids has been claimed in previous patent applications. For instance, CN1019968481 discloses a special kit for detecting existence of heavy metal copper based on a rapid immunological detection of copper using a coating antigen. A semi-quantitative procedure for the determination of copper in blood serum by a modified filter paper has been disclosed by RU2225618. Determination of metals in complex biological fluids is often associated with matrix effects that originate from interfering effects of molecules with high molecular weights. Therefore, the interfering effects of biological molecules must be considered in any procedure. For instance, RU2184973 discloses a procedure for removing biological molecules from whole blood samples using acid treatment and ashing procedures prior to analysis by instrumental methods. However, pre-treatments of samples for metal analysis are often time consuming, costly and labour intensive. Therefore, there is an extensive demand for a rapid and direct analytical procedure without sample pre-treatment for biological samples. CN1635379 discloses a test agent box to measure copper, iron and zinc in blood serum and a method for the agent box. The agent box contains an agent to dissociate the protein-copper bonds and a pyridylazo organic dye to develop colour with metal ions. However, pyridylazo dyes are non-selective reagents and make complexes with many metal ions to change colour from yellow to red (T. Liu et al, J. Hazardous Mater. 201-202, 2012, 1550).

The present invention relates to a novel process for preparing a single kit for the rapid, sensitive and low cost determination of copper and zinc in fluids containing high concentration of proteins and interfering molecules (e.g. biological fluids). The kit has been designed to minimize interferences and to measure both metals with one chelator (i.e. Zincon; 2-carboxy-2'-hydroxy-5'-sulfoformazylbenzene, Scheme 1). Zincon has been used for the photometric measurement of copper, zinc in previous reports (e.g. C. Sabel et al, Anal. Biochem. 397, 2010, 218.; A. Vitorino et al, J. Braz. Chem. Soc. 7, 1996, 161.) However, this diazo dye when is dissolved in an aqueous solution is prone to oxidation and lack of stability. In addition, the compensation of the interfering effects of proteins in complex matrices have not been properly reported. The present invented kit contains special combination of reagents for the stabilisation of reagents, enhancement of photometric response and compensation of interferences originate from complex sample matrices.

## Summary of the Invention

The kit has been designed to store the reagents in a water-soluble polymer for maximum stability, versatility and performance.

Zincon is known to make 1:1 complexes with $Cu^{2+}$ at acidic/neutral solutions and with $Zn^{2+}$ at alkaline solutions. In this invention, the chelating agent, Zincon, and a novel procedure for the determination of copper at pH=6-6.5 and zinc (pH=9-9.5) was employed. In addition, a new buffer for the enhancement of signal and a solution for stabilizing Zincone in liquid form has been disclosed. The advantages of this invention compared to the relevant prior art are:

1. High sensitivity
2. Low interference
3. User friendly; no expertise required
4. Can be used both manually and in automatic analysers in addition to ELISA micro plate readers
5. Rapid and reliable measurement
6. Long term stability of reagents at room temperature
7. Low cost per test
8. Can be also used for all types of fluids including biological, industrial, aqueous and nonaqueous samples
9. Require very small volumes of samples

## Brief Description of Drawings

Scheme 1 shows the molecular structure of Zincon. UV-Vis spectra of Zincon and its complexes with copper at neutral to alkaline pHs in the experimental conditions used in the kit are shown in Figs 1-6. Figure 1 shows a spectrum of free reagent at pH=7. The spectrum shows a maximum absorption at $\lambda_{max}$=570 nm and $\varepsilon$= 26,900. Figure 2 corresponds to the spectrum of free Zincon at pH=9 with a maximum absorption at $\lambda_{max}$=575 nm. Figure 3 shows a spectrum of Zincon-Cu complex at pH=7. The spectrum shows $\lambda_{max}$=620-630 nm and $\varepsilon$= 25,600. Figure 4 illustrates a spectrum of Zincon-Cu complex at pH=9. At this pH, minor absorption is observed at wavelengths above 600 nm. However, Zincon-Zn complex at pH=7 shows a $\lambda_{max}$=645 nm (Fig. 5). Figure 6 corresponds to Zinccon-Zn complex at pH=9 shows a maximum wavelength of 670 nm.

Figure 7 shows a photometric response of copper-Zincon complex for a concentration range between 0.05 to 2 $\mu$M at pH=6.5. A calibration curve to represent the linearity of Absorbance with concentration at 620 nm according to the Beer's law is in evidence (Fig. 7). Figure 8 corresponds to the analytical plot of the determination of copper in blood serum using the standard addition technique.

The plot shows a full linear relationship between Absorbance and concentration of copper in a blood serum sample at 630 nm. The intercept shows the amount of copper in serum in $\mu$M. Table 1 compares the results for several plasma samples obtained by the kit compared with ICP-MS technique. The kit gives excellent accuracy of the measurement as compared with ICP-MS. Figure 9 shows the variation of several measurements for a single sample and their individual variations from the Mean indicating a high precision value for the kit.

## Detailed Description of the Invention

For the measurement of copper, the interference from Zn and other ions in the sample are avoided by the reagents and experimental conditions used. For releasing Cu from proteins in real samples like serum and plasma, special releasing agents are used in a modified buffer solution for a colour and thus signal enhancement. Therefore, total Cu in samples are measured in this procedure. Free Zincon in the aqueous reagent (R2) shows a $\lambda_{max}$=570 nm; $\varepsilon$= 26,900 whereas, Zincon-Cu complex $\lambda_{max}$=620-630 nm, $\varepsilon$= 25,600. In the present disclosed kit, zinc does not interfere for the measurement of copper in the experimental condition used (i.e. specific buffer releasing and enhancing agent for Cu, acidic-neutral pH, measuring wavelength (620 nm).

For the measurement of zinc, no interference from Cu and other ions are observed due to the unique reagent and wavelength measurement. The special formula of reagent used for zinc contains thiourea instead urea for releasing zinc ions from binding proteins. It also masks Cu ions and thus no interference from copper is expected. The measurement takes place at a wavelength of 670-680 nm that free Zincon and Zincon-Cu complex have minor absorption interferences.

The assay linearity is in the range of 0.5 to 100 micromole/liter ($\mu$mol/L).The accuracy of the copper assay has been validated by comparing the results obtained by the ICP-MS with those of the assay kit for copper in serum samples (Table 1) with an agreement of 0.89. The method has a sensitivity of 0.02 micromole/liter ($\mu$mol/L) for Cu. The specific reagents used in the assay kit preclude interference by the presence of other elements such as Fe and Zn in samples.

This assay is only for the in-vitro and selective copper and zinc measurements. The assay exhibits no interference from the following substances at or above the upper normal clinical range concentrations: Ascorbic Acid, Bilirubin,

triglyceride, and Fe.

Reagents

R1-Cu for the measurement of $Cu^{2+}$ contains: 1.5 gr urea, 1.2 gr low molecular weight PVP (polyvinylpyrrolidon), 20 μL surfactant (Triton X-100) in 100 ml pure water and pH=6-6.5 is adjusted with Borax/Boric acid.
R1-Zn for the measurement of $Zn^{2+}$ contains: 1.5 gr thiourea, 1.2 gr low molecular weight PVP, 20 μL surfactant (Triton X-100) in 100 ml pure water and pH=9.9.5 is adjusted with Borax.
R2 for both metals: 0.0045 gr Zincon and 0.1 gr PVP in 5 ml isopropanol
CAL-1: a standard solution of copper or zinc in R1 reagent with a final concentration according to the sample (20 micro M for blood serum)
CAL-2: second standard solution of copper or zinc in R1 reagent with final a concentration according to the sample (40 micro M for blood serum)

**Example 1**

The kit has been designed for fresh blood serum and urine without de-proteinisation.
The disclosed assay kit may be set up on automated laboratory analysers or be used manually as described below:

Automated Laboratory Analysers

Automated analysers allow rapid and sequential measurement of total copper after three simple steps. The procedure for the assay kit can be set up for any auto-analyser depending on the make and model of the instrument, which can be obtained from the technical sheet of a given auto-analyser.

Manual methods

This method may be performed either by using a 96-well plate on a plate-reader or by a simple laboratory photometer device.
The first procedure is suitable for laboratories with low to medium throughput using 96-well plate on an ELISA plate reader. The number of replicates depends on the user's decision. This procedure has the advantages of using small sample size (e.g. 20 microliter) and reagents volumes for each assay thus providing a cost-effective, rapid and accurate measurement of the copper and zinc levels in biological fluids.
The photometric device which uses a regular single beam visible spectrophotometer is an apt option when a fewer samples are batched for rapid concentration measurement in biological fluids.

Kit A: in a 96-well plate

Use a clean, dry plate, free from contamination. Each specimen is measured in a single column with the corresponding 'blank'.
Prepare wells as below:

Well 1: 200 microliter (μL) Reagent 1 (R1) + 20 microliter (μL) specimen + 30 microliter (μL) R2;
Well 2: 200 microliter (μL) CAL-1 + 20 microliter (μL) specimen + 30 microliter (μL) R2;
Well 3: 200 microliter (μL) CAL-2 + 20 microliter (μL) specimen + 30 microliter (μL) R2;
Well 4: 230 microliter (μL) Reagent 1 (R1)+ 20 microliter (μL) specimen (Blank). The **'blank well'** contains all reagents and sample except the dye (R2).

After the addition of R2 to all wells except the 'blank' well, mix the content of each well gently using a plate shaker. Leave the mixture to stand at room temperature for 5 minutes, and then using a plate reader, measure the Absorbance for each well at 620 nm wavelength for Cu and 680 nm for Zn.
Calculation: After recording Absorbance for wells 1-3 (A1, A2, A3), the following equation should be applied to calculate the amount of total copper present in the specimen based on micromole/liter (μmol/L):

$$\text{Sample Cu or Zn } (\mu mol/L) = 20 - (A1+A2+A3) \times 800 / [(60\times A2+120\times A3) - 60 \times (A1+A2+A3)] \quad \text{(Equation 1)}$$

Kit B using a regular visible photometer

In this method, a 1mL photometric cell (Cuvette) is used where three individual measurements for each specimen should be carried out. A single 'blank' should be used before each measurement:

Blank: 920 microliter (μL) R1 + 80 microliter (μL) specimen (Sample blank)

The measurements for each sample are as follow:

A1= 800 microliter (μL) R1 + 80 microliter (μL) specimen + 120 microliter (μL) R2
A2= 800 microliter (μL) Cal1 + 80 microliter (μL) specimen + 120 microliter (μL) R2
A3= 800 microliter (μL) Cal2 + 80 microliter (μL) specimen + 120 microliter (μL) R2
Blank=920 microliter (μL) R1 + 80 microliter (μL) specimen.
After reading the Absorbance for each sample, the amount of total copper is calculated using Equation 1 (see above).

**Example 2**

This procedure has been checked for complex liquids containing insoluble or coloured materials such, milk chocolate, fruit juices and syrups. Due to the low stability of $Zn^{2+}$ ions in strong alkaline solutions (i.e. pH=9-9.5) used for the measurement, this kit is more suitable for long term storage.

The assay kit may be set up on automated laboratory analysers or be used manually as described below:

prepare the following solutions in separate small vials (e.g. Eppendorf) just before the measurement:

CAL0= add 100 microliter (μL) of the specimen to 1000 microliter of R1 and 150 microliter or R2 in small vial;
CAL1= add 100 microliter (μL) of the specimen to 950 microliter of R1+ 50 microliter of CAL+150 microliter of R2;
CAL2= add 100 microliter of the specimen to 900 microliter of R1 + 100 microliter of CAL + 150 microliter of R2;
BLN= blank solution containing 100 microliter sample + 1150 microliter R1
Mark all vials and mix them well, then centrifuge between 5000-10,000 rpm for five minutes and then take suitable volume according to the photometric method is used as follows:

Automated Laboratory Analysers

Automated analysers allow rapid and sequential measurement of total copper after three simple steps. The procedure for the assay kit can be set up for any auto-analyser depending on the make and model of the instrument, which can be obtained from the technical sheet of a given auto-analyser.

Manual methods

This method may be performed either by using a 96-well plate on a plate-reader or by a simple laboratory photometer device.

The first procedure is suitable for laboratories with low to medium throughput using 96-well plate on an Elisa plate reader. The number of replicates depends on the user's decision. This procedure has the advantages of using small sample size (e.g. 30 microliter) and reagents volumes for each assay thus providing a cost-effective, rapid and accurate measurement of the copper levels in biological fluids.

The photometric device which uses a regular single beam visible spectrophotometer is an apt option when a fewer samples are batched for rapid copper concentration measurement in biological fluids.

Kit A: in a 96-well plate

Use a clean, dry plate, free from contamination. Each specimen is measured in a single column with the corresponding 'blank'.

Prepare wells as below:

Well 1:250 microliter (μL) CAL0 (A1)
Well 2: 250 microliter (μL) CAL1 (A2)
Well 3: 250 microliter (μL) CAL2 (A3)
Well 4: 250 microliter (μL) BLN

using a plate reader, measure the Absorbance for each well at 610-620 nm for copper and 680 nm for zinc against the blank.

After recording Absorbance for wells 1-3 (A1, A2, A3), the following equation should be applied to calculate the amount of total copper or zinc present in the specimen based on micromole/liter (μmol/L):

$$\text{Sample Cu or Zn } (\mu mol/L) = 20 - (A1+A2+A3) \times 800 / [(60 \times A2+120 \times A3) - 60 \times (A1+A2+A3)] \quad \text{(Equation 1)}$$

The above procedure is described when measurement is carried out in singlicate. A mean will be used if measurement is carried out in replicate.

Kit B: using a regular visible photometer

In this method, a 1mL photometric cell (Cuvette) is used where three individual measurements for each specimen should be carried out. A single 'blank' should be used before each measurement:

The three absorbance measurements for each sample are as follow:

A1= CAL0
A2= CAL1
A3= CAL2

After reading the Absorbance for each sample, the amount of total copper is calculated using Equation 1 (see above).

**Example 3**

Strip tests for copper and zinc in aqueous and nonaqueous solutions for the application in water and wastewater, corrosion measurements in pipes, in food, dairy and petroleum industries in addition to biological fluids (urine, serum etc.) are disclosed by using similar reagents in the present invention.

1. Test strips for copper ions: strip papers are soaked in R1-Cu reagent and after drying; they are soaked in R2 and let them dry in air.
2. Test strips for zinc ions: strip paper are soaked in R1-Zn reagent and after drying; they are soacked in R2 and let them dry in air.

The strips show a colour change from red to blue when they are in contact with copper or zinc ions.

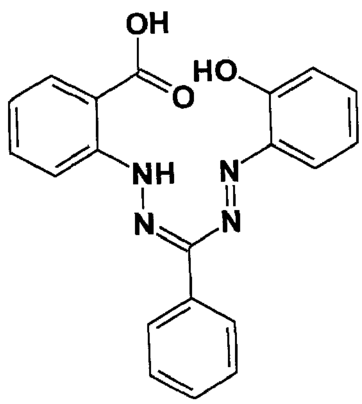

**Scheme 1.**

**Table 1. Method comparison**

| Sample ID | Results (μmol/L) | |
|---|---|---|
| | Dye-binding | ICP-MS |
| 1 | 18.0 | 18.7 |
| 2 | 15.5 | 15.8 |
| 3 | 25.5 | 28.8 |
| 4 | 11.0 | 12.5 |
| 5 | 21.0 | 22.2 |
| 6 | 16.0 | 14.1 |
| 7 | 17 | 23.7 |
| 8 | 15.5 | 16.6 |
| 9 | 15.5 | 17.8 |
| 10 | 14 | 15.1 |
| 11 | 21 | 19.1 |
| 12 | 30.0 | 28.0 |
| | | |
| Mean | 19.36 | 18.33 |
| SD | 5.27 | 5.28 |
| SEM | 1.52 | 1.52 |

## Claims

1. Test kit prepared in a water soluble polymeric matrix for the sensitive, selective and rapid photometric determination of copper and zinc in fluids containing high concentration of interfering molecules (e.g. proteins) comprises Zincon stabilised with PVP in isopropanol, metal releasing and colour enhancing agents comprising urea/PVP/Triton X100 at pH=6.5 for copper or thiourea/PVP/Triton X100 at pH=9 for zinc.

2. The kit disclosed in claim 1, wherein Zincone stabilised with short chain polyvinylpyrrolidon (PVP) in isopropanol solution of the chelating agent for the long-term storage of the solution for the photometric determination of zinc and copper.

3. The kit in claim 1 comprises urea for releasing copper ions from their binding molecules (e.g. proteins) and improving their stability for enhanced photometric response and selective determination.

4. The kit in claim 1 comprises thiourea for releasing zinc ions from their binding molecules (e.g. proteins) and improving their stability for enhanced photometric response and selective determination.

5. The stabilizing agent (PVP) in claim 2 also acts as colour enhancing agent.

6. The chelating agent in claim 2 at the condition with a maximum absorption wavelength of $\lambda_{max}$=530 nm at pH=7 and $\lambda_{max}$=560 nm at pH=9 in isopropanol whereas its complexes for copper at pH=7, a maximum absorption wavelength of $\lambda_{max}$= 630 nm at pH=7 and for zinc a maximum absorption wavelength of $\lambda_{max}$= 670 nm.

7. The kit in claim 1 comprises surfactant Triton X-100 for releasing metal ions from said interfering agents including proteins and improving the photometric response and sensitivity.

8. The kit in claim 1 comprises a standard addition technique for compensating and minimising matrix effects from liquids with complex matrices including biological fluids.

**9.** The reagents in claims 3 and 4 are selected for improving the selectivity of the method in addition to other parameters (e.g. pH and wavelength control).

**10.** The kit in claim 1 can be used either with automatic analysers, regular lab photometers or in any ELISA well plates and a plate reader as well as making paper strip tests.

**11.** The kit in claim 1 comprises a method for minimising interferences from liquids with complex matrices including biological fluids.

**12.** The kit in claim 1 comprises a mathematical equation for accurate calculation of copper and zinc in samples with three measurements for each test.

**13.** The kit in claim 1 can be performed with minimum expertise and lab experience for medium to high throughput labs.

**14.** The combination invented in the kit in claim 1 allows a low cost preparation of the reagents for providing a relatively low cost measurement test.

**15.** The kit in claim 1 can be adapted for most sample liquids including industrial fluids, water and wastewater, beverages, juices, serum, urine, seminal fluids, saliva, cerebral spinal fluids (SSF).

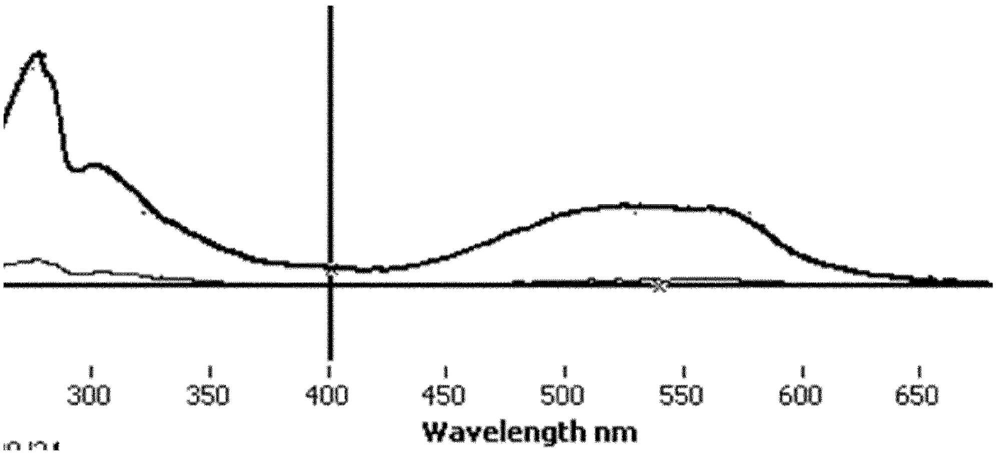


**Figure 1.**

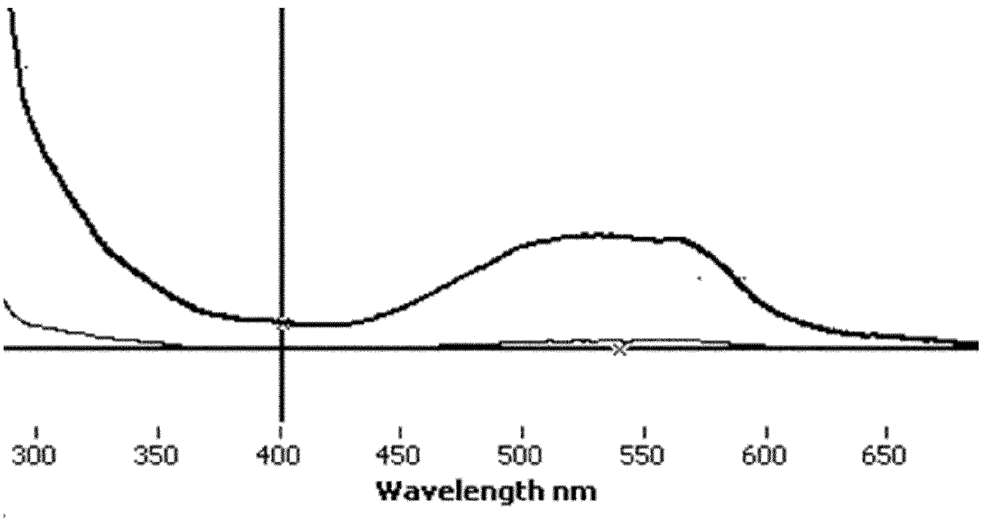


**Figure 2.**

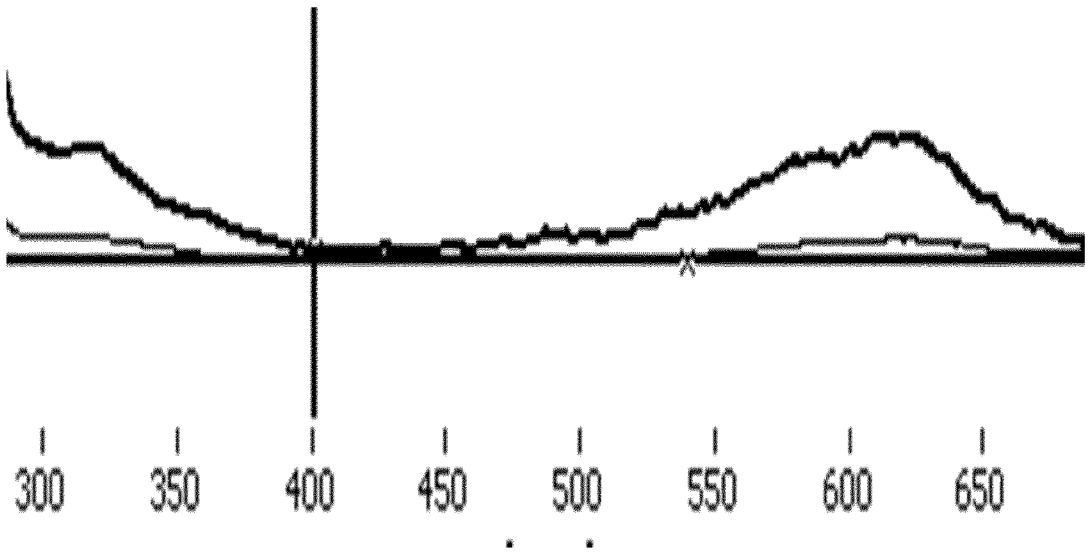


Figure 3.

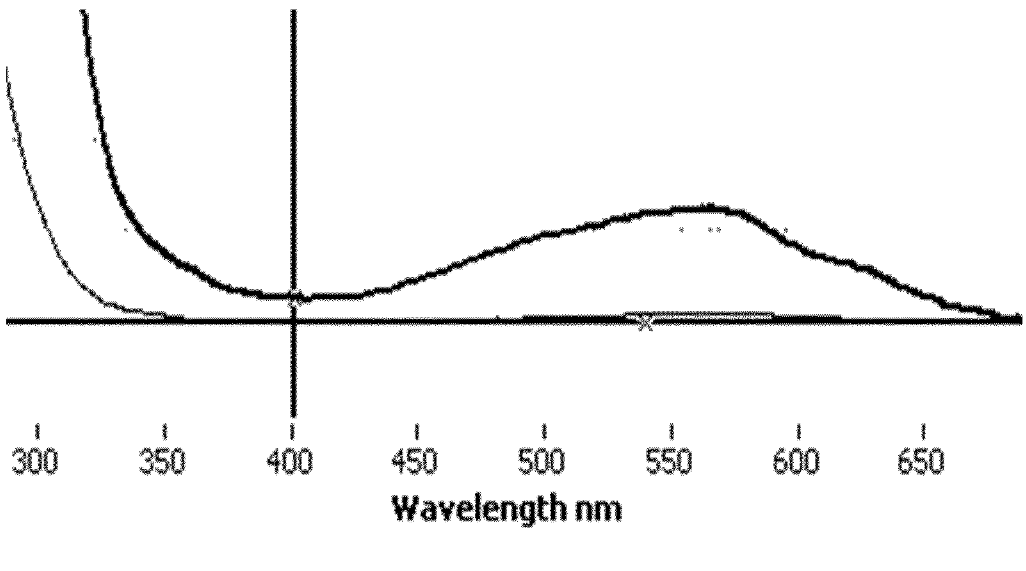


Figure 4.

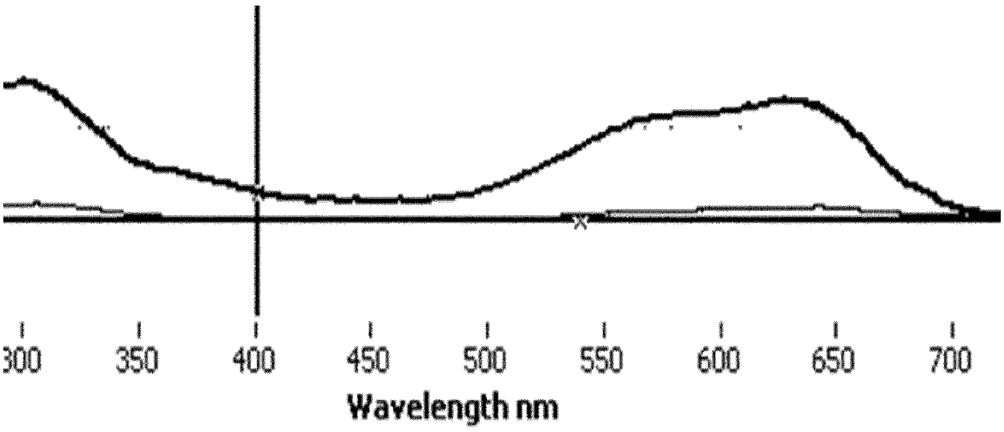


Figure 5.

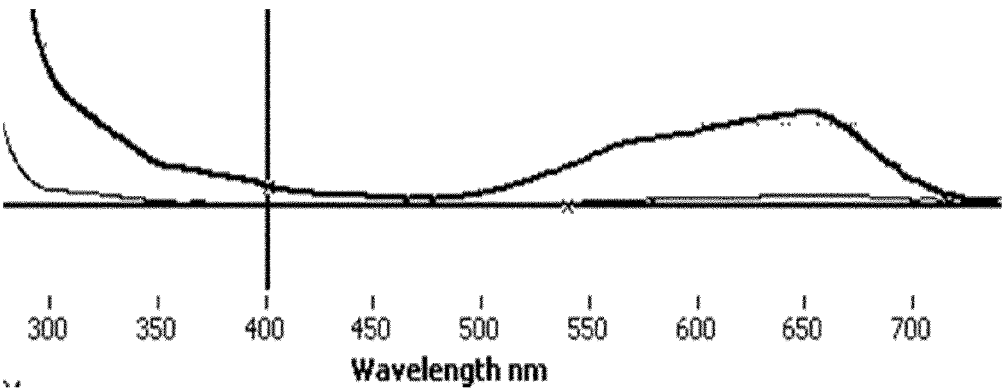


Figure 6.

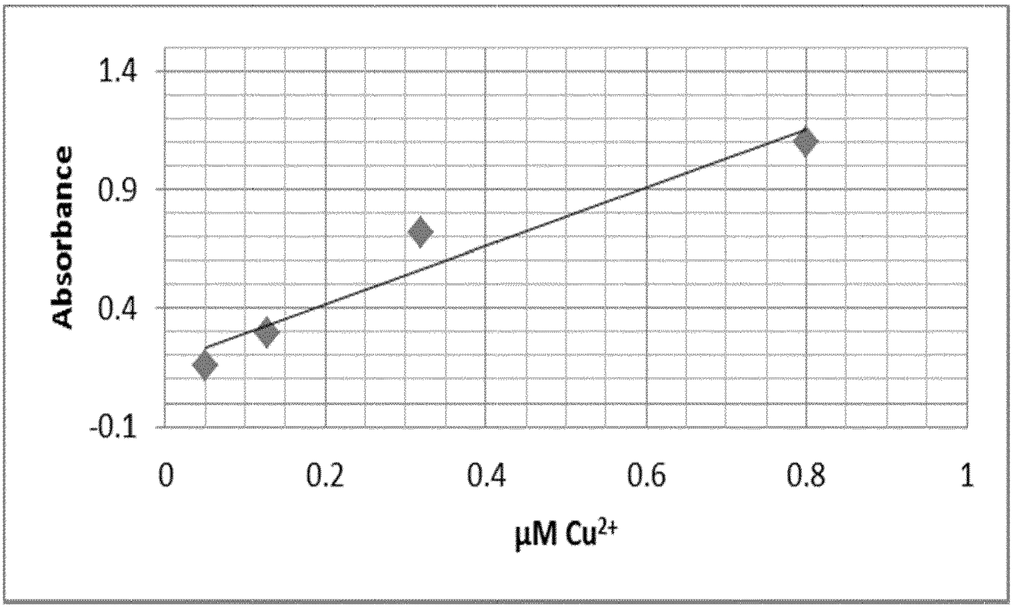


Figure 7.

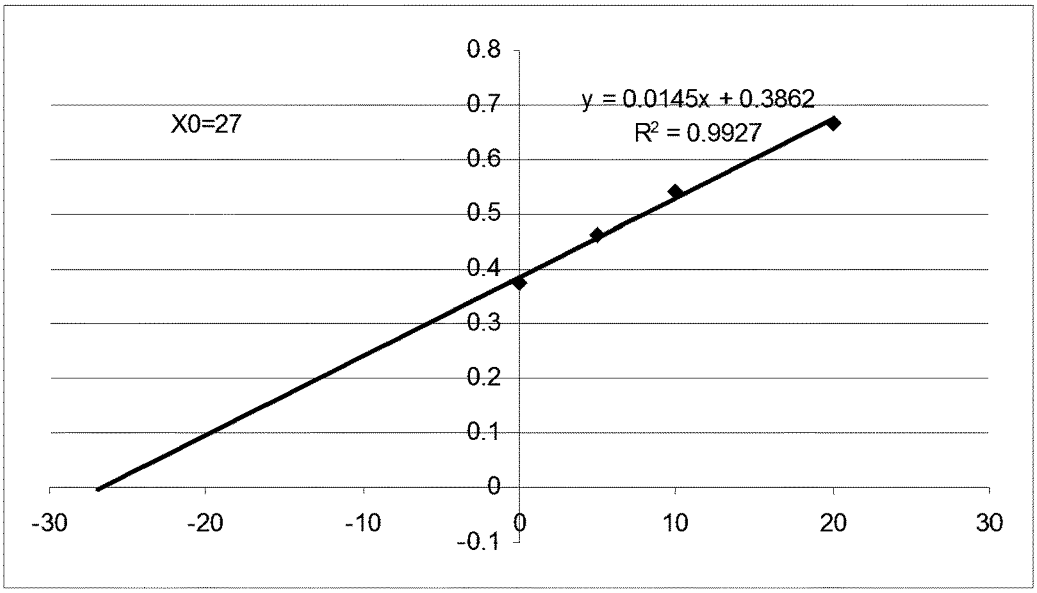


Figure 8.

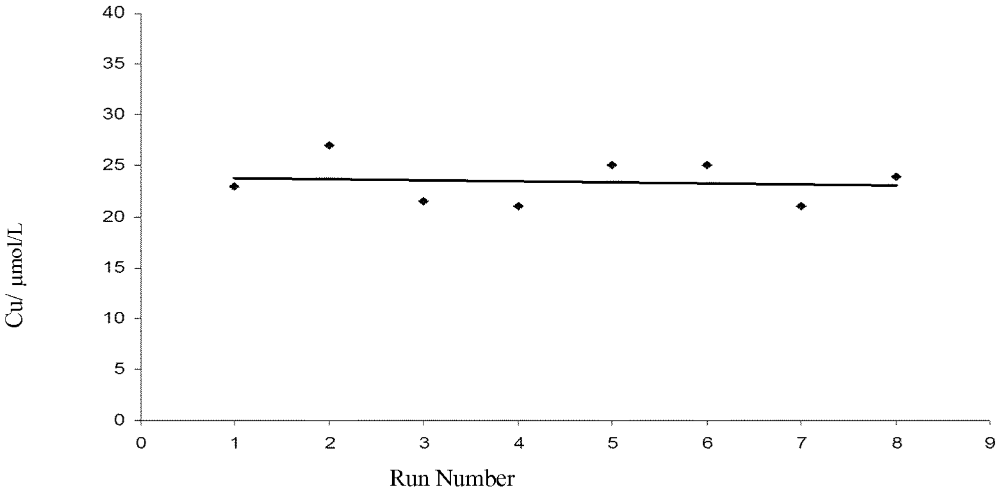


**Figure 9.**

Europäisches Patentamt
European Patent Office
Office européen des brevets

# EUROPEAN SEARCH REPORT

Application Number
EP 13 16 1031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RASTEGARZADEH ET AL: "An optical sensor for zinc determination based on Zincon as sensing reagent", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 129, no. 1, 17 January 2008 (2008-01-17), pages 327-331, XP022424883, ISSN: 0925-4005, DOI: 10.1016/J.SNB.2007.08.016<br>* abstract *<br>* page 327, right-hand column - page 328, left-hand column *<br>* Section: Reagents and solutions *<br>* Section: Results and discussion *<br>----- | 1-15 | INV.<br>G01N31/22 |
| Y | I OEHME: "The effect of polymeric supports and methods of immobilization on the performance of an optical copper(II)-sensitive membrane based on the colourimetric reagent Zincon", TALANTA, vol. 47, no. 3, 1 November 1998 (1998-11-01), pages 595-604, XP055073655, ISSN: 0039-9140, DOI: 10.1016/S0039-9140(98)00084-8<br>* abstract *<br>* Sections: Reagents, Immobilization protocols *<br>* Section: Results and discussion, in particular 3.3. Physical immobilization in organic polymers *<br>-----<br>-/-- | 1-15 | TECHNICAL FIELDS SEARCHED (IPC)<br>G01N |

The present search report has been drawn up for all claims

1

| Place of search | Date of completion of the search | Examiner |
|---|---|---|
| Munich | 1 August 2013 | Michalitsch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 13 16 1031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Ines Oehme ET AL: "LED-compatible copper(II)-selective optrode membrane based on lipophilized Zincon", , 1 January 1994 (1994-01-01), pages 563-567, XP055073686, Retrieved from the Internet: URL:http://rd.springer.com/content/pdf/10.1007/BF00321805.pdf [retrieved on 2013-07-31] * abstract * * page 563, right-hand column, last paragraph - page 564, left-hand column, paragraph 1 * * Experimental Section: Reagents, Membrane preparation, * ----- | 1-15 | |
| Y | SABEL C E ET AL: "A spectrophotometric method for the determination of zinc, copper, and cobalt ions in metalloproteins using Zincon", ANALYTICAL BIOCHEMISTRY, ACADEMIC PRESS INC, NEW YORK, vol. 397, no. 2, 15 February 2010 (2010-02-15), pages 218-226, XP026811280, ISSN: 0003-2697 [retrieved on 2009-10-23] * the whole document * ----- | 1-15 | TECHNICAL FIELDS SEARCHED (IPC) |
| Y | EP 2 261 656 A1 (ARKRAY INC [JP]) 15 December 2010 (2010-12-15) * paragraphs [0029] - [0033] * * paragraph [0045] * * paragraph [0055] * * paragraph [0061] * ----- -/-- | 1-15 | |

1

The present search report has been drawn up for all claims

| Place of search | Date of completion of the search | Examiner |
|---|---|---|
| Munich | 1 August 2013 | Michalitsch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 13 16 1031

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| Y | EP 1 992 943 A1 (SHINO TEST CORP [JP]) 19 November 2008 (2008-11-19) * paragraphs [0018] - [0021] * * paragraphs [0040] - [0042] * * paragraph [0078] * * paragraph [0149] * ----- | 1-15 | |
| Y,D | CN 1 635 379 A (CAO JIANMING [CN] WENZHOU MEDICAL INST [CN]) 6 July 2005 (2005-07-06) * pages 1-3 * ----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 1 August 2013 | Michalitsch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 16 1031

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2013

| Patent document cited in search report | Publication date | Patent family member(s) | Publication date |
|---|---|---|---|
| EP 2261656 A1 | 15-12-2010 | CN 101978263 A | 16-02-2011 |
| | | EP 2261656 A1 | 15-12-2010 |
| | | US 2011020943 A1 | 27-01-2011 |
| | | WO 2009116669 A1 | 24-09-2009 |
| EP 1992943 A1 | 19-11-2008 | CN 101389954 A | 18-03-2009 |
| | | EP 1992943 A1 | 19-11-2008 |
| | | US 2009017545 A1 | 15-01-2009 |
| | | WO 2007097468 A1 | 30-08-2007 |
| CN 1635379 A | 06-07-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1019968481
- RU 2225618
- RU 2184973
- CN 1635379


### Non-patent literature cited in the description


- **L. A. KAPLAN ; A. J. PESCE.** Clinical Chemistry. 1989
- **L. A. KAPLAN ; A. J. PESCE.** Clinical Chemistry. 1989, 535
- **T. P. COULTATE.** *Food, The Chemistry of its Components,* 2001
- **T. LIU et al.** *J. Hazardous Mater,* 2012, vol. 201-202, 1550
- **C. SABEL et al.** *Anal. Biochem.,* 2010, vol. 397, 218
- **A. VITORINO et al.** *J. Braz. Chem. Soc.,* 1996, vol. 7, 161